(19) Europäisches Patentamt / European Patent Office / Office européen des brevets

(11) **EP 2 688 756 B1**

(12) **EUROPEAN PATENT SPECIFICATION**

(45) Date of publication and mention
of the grant of the patent:
**10.05.2017 Bulletin 2017/19**

(21) Application number: **12714409.5**

(22) Date of filing: **26.03.2012**

(51) Int Cl.:
**B60G 11/27** *(2006.01)*    **B60G 99/00** *(2010.01)*
**B60G 17/052** *(2006.01)*

(86) International application number:
**PCT/NL2012/050192**

(87) International publication number:
**WO 2012/134277 (04.10.2012 Gazette 2012/40)**

(54) **SUSPENSION SYSTEM FOR A DRIVER'S COMPARTMENT OF A VEHICLE**

AUFHÄNGUNGSSYSTEM FÜR EINE FAHRERKABINE EINES FAHRZEUGS

SUSPENSION DESTINÉE AU POSTE DE CONDUITE D'UN VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.03.2011 NL 2006476
28.07.2011 NL 2007191**

(43) Date of publication of application:
**29.01.2014 Bulletin 2014/05**

(73) Proprietor: **Daf Trucks N.V.
5600 PT Eindhoven (NL)**

(72) Inventors:
• **VAN DER KNAAP, Albertus Clemens Maria
NL-5643 TW Eindhoven (NL)**
• **BEENAKKERS, Menno Adrianus
NL-5643 TW Eindhoven (NL)**
• **VANDENHOUDT, Jeroen
NL-5643 TW Eindhoven (NL)**

(74) Representative: **V.O.
P.O. Box 87930
2508 DH Den Haag (NL)**

(56) References cited:
**EP-A1- 1 734 296          DE-A1- 2 226 189
DE-A1-102009 012 581     GB-A- 2 044 541
US-A- 5 027 846          US-A- 5 328 147
US-A- 5 454 452          US-A1- 2001 054 703
US-A1- 2008 185 549**

**Description**

FIELD AND BACKGROUND OF THE INVENTION

The present invention relates to a suspension system for a driver's compartment of a vehicle, more in particular, a suspension system including pneumatic springs.

Driving comfort optimization in vehicles, in particular, trucks with cabins suspended from the vehicle's chassis, has always been a point of attention. While most focus has been on optimizing passive suspension and adjusting the passive characteristics to vehicle and/or road conditions also, suspension systems have been proposed that minimize the disturbances relayed via the chassis by actively neutralizing the impact of road and/or vehicle disturbances in the cabin's suspension system. The aim is here to neutralize any disturbance in the cabin so that the suspension system holds the cabin virtually stable in a forced position countering roll, pitch or heave movements that occur in the vehicle due to accelerations. In addition, the cabin may be kept in a rest position with minimal impact deflection.

Such conventional active suspension systems experience difficulty in tuning and suffer from fairly high energy demand, which is a drawback in today's focus for energy economization.

While most of the active suspension utilize hydraulic pressure, in SAE technical paper series/,pap. 910023 1991 A. Wiesmeier, F. Uffelmann (IVECO Truck Engineering) "Vibration Isolated Cabin by Active Suspension - Requirements, Concept and First Results" a pneumatic setup is contemplated. The paper further details on a hydraulic suspension with a proportional valve arrangement for a suspended cabin configuration. A central pressure supply source is used to operate the pressure cylinders. A pneumatic setup was found unattractive in view of temperature and energy efficiency considerations. Indeed, Boyles thermodynamic gas law requires a complex physical model to be able to control the springs based on mass flow.

DE102009012581, which is considered as the closest prior art, nevertheless explores this direction and utilizes an inverted model of thermodynamic ground equations that is linearized over a control range to provide a controlled force in the pneumatic springs wherein a feed forward control is required for prediction of the required air mass in the pneumatic spring. A pneumatic proportional valve is contemplated to implement as a valve between a central pressure and the pneumatic springs. Importantly, it is contemplated that a proportional valve has a settable valve opening, dependent on a control voltage (or electric solenoid current).

WO 2010/019038 discloses a multipoint hydraulic suspension with an active and passive control mode.

The invention has as an object to provide a driver's compartment suspension with a valve control concept that is easily manufacturable and that has a smooth and high precision control of the gas pressure in the pneumatic springs, in order to neutralize road and/or vehicle disturbances in the driver's compartment.

SUMMARY OF THE INVENTION

According to an aspect of the invention a suspension system for a driver's compartment on a vehicle chassis is provided, comprising a mounting arrangement for mounting the driver's compartment on the vehicle chassis including at least two pneumatic springs to be arranged along a lateral side of driver's compartment and coupled between the driver's compartment and the vehicle chassis. The suspension system includes a pressure supply and an atmospheric vent.

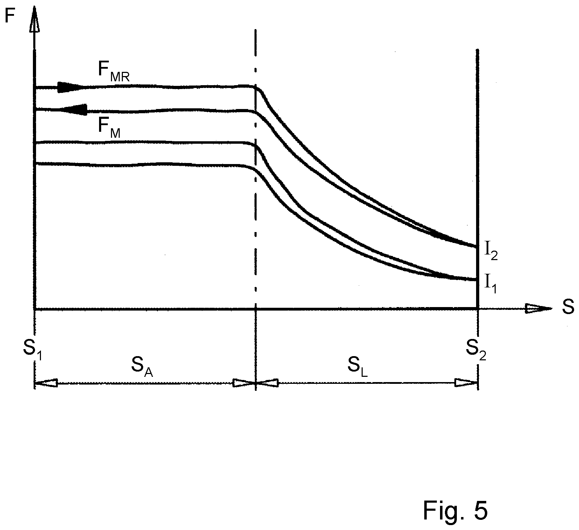

For each pneumatic spring a valve device is communicatively coupled to the pressure supply; the vent and a respective pneumatic spring via a pressure terminal; vent terminal and spring terminal. The valve device comprises at least a first valve having a valve outlet formed by the spring terminal and a valve inlet communicatively coupled to the pressure supply. Said at least first valve comprises a valve seat separating the valve inlet and the valve outlet; a valve member that is pressed in normally closed condition against the valve seat by a spring means. In use, an inlet pressure is exerted on the valvemember via the valve seat orifice, the valve member being enclosed in the valve outlet so that an outlet pressure counteracts on the valve member; the valve member being subject to force generated by a pressure difference between inlet and outlet. An electric actuator is coupled to the valve member. A continuously variable force setpoint can be set that activates a valve integrated pressure servo mechanism (explained in further detail with the discussion of Figure 5) and thus defines a set force counteracting the pressure difference between the inlet and outlet and a controller is provided for setting the force setpoint of the valve by powering the actuator based on a reference set value.

In this way, a smooth continuously variable operation is achieved without complexity since the pressure set parameters according to this arrangement can directly control the mechanical force dynamics required for driver's compartment movement irrespective of temperature and mass flow.

Further areas of applicability of the present systems and methods will become apparent from the detailed description provided hereinafter. It should be understood that the detailed description and specific examples, while indicating exemplary embodiments of the displays and methods, are intended for purposes of illustration only and are not intended to limit the scope of the invention.

BRIEF DESCRIPTION OF THE DRAWINGS

These and other features, aspects, and advantages of the apparatus, systems and methods of the present invention will become better understood from the following description, appended claims, and accompanying drawing wherein:

Figure 1 shows one of the pneumatic springs with a valve system;
Figure 2 shows an alternative switching arrangement of Figure 1;
Figure 3 shows a pneumatic proportional pressure control valve with integrated pressure servo mechanism in more detail;
Figure 4 shows the working principle of the valve of Figure 3;
Figure 5 shows an exemplary force diagram of the settable force valve;
Figure 6 shows another embodiment according to the invention;
Figure 7 show a pressure control loop illustrating no temperature and volume dependencies; and
Figure 8 shows an exemplary vehicle state estimation diagram
Figure 9 shows multiple trailer configurations in combination with corresponding haptonomic roll-over warning feedback strategies of said active cabin suspension system.
Fig. 10 shows yet another embodiment according to the invention;

DETAILED DESCRIPTION

The following description of certain exemplary embodiments is merely exemplary in nature and is in no way intended to limit the invention, its application, or uses. In the following detailed description of embodiments of the present systems, devices and methods, reference is made to the accompanying drawings which form a part hereof, and in which are shown by way of illustration specific embodiments in which the described devices and methods may be practiced. These embodiments are described in sufficient detail to enable those skilled in the art to practice the presently disclosed systems and methods, and it is to be understood that other embodiments may be utilized and that structural and logical changes may be made without departing from the scope of the present system.

The following detailed description is therefore not to be taken in a limiting sense, and the scope of the present system is defined only by the appended claims. The leading digit(s) of the reference numbers in the figures herein typically correspond to the figure number, with the exception that identical components which appear in multiple figures are identified by the same reference numbers. Moreover, for the purpose of clarity, detailed descriptions of well-known devices, circuits, and methods are omitted so as not to obscure the description of the present system.

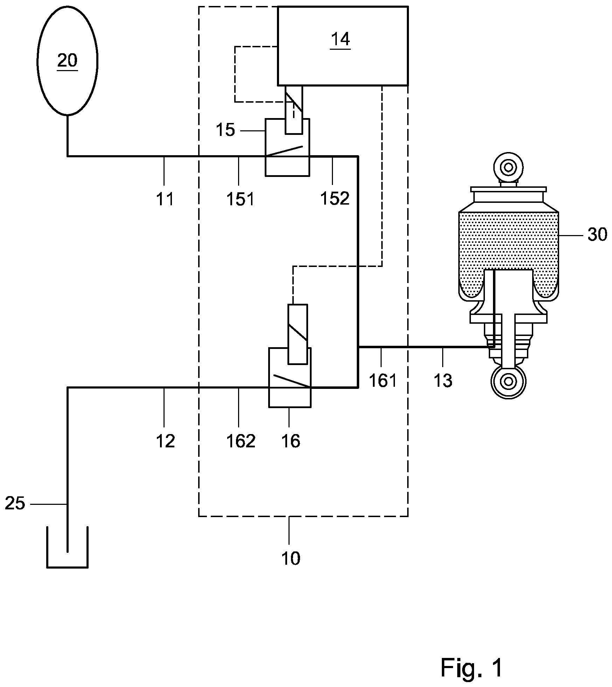

Figure 1 shows a pneumatic spring 30 with a valve device 10 which selectively couples the spring 30 to either a pressure supply 20 or a vent 25. The pneumatic spring forms part of a mounting arrangement for mounting a driver's compartment on a vehicle chassis; typically of a large freight truck (not shown). The suspension is preferably arranged in a four point suspension but can also be formed as a two or three point pneumatic suspension; for example, in combination with couplers coupling the cabin to the vehicle chassis such as (flexible) hinges; for example, with the pneumatic springs arranged along a lateral side of the driver's compartment, typically a front side of the vehicle. In this way, the spring 30 can be coupled between a driver's compartment and a vehicle chassis (not shown) and forms a pneumatic spring that can be communicatively coupled selectively to the pressure supply 20 or vent 25 to obtain gas mass flow to or from the spring 30. The valve device is communicatively coupled to the pressure supply via pressure terminal 11; to the vent via vent terminal 12 and to a respective pneumatic spring via spring terminal 13. The valve device comprises a first valve 15 selectively coupling the pneumatic spring 30 and the pressure supply 20 and a second valve 16 selectively coupling the pneumatic spring 30 and the vent 25 under control of a controller 14 arranged to switch first and second valves 15, 16 alternatively for pressurizing or depressurizing the pneumatic spring 30.

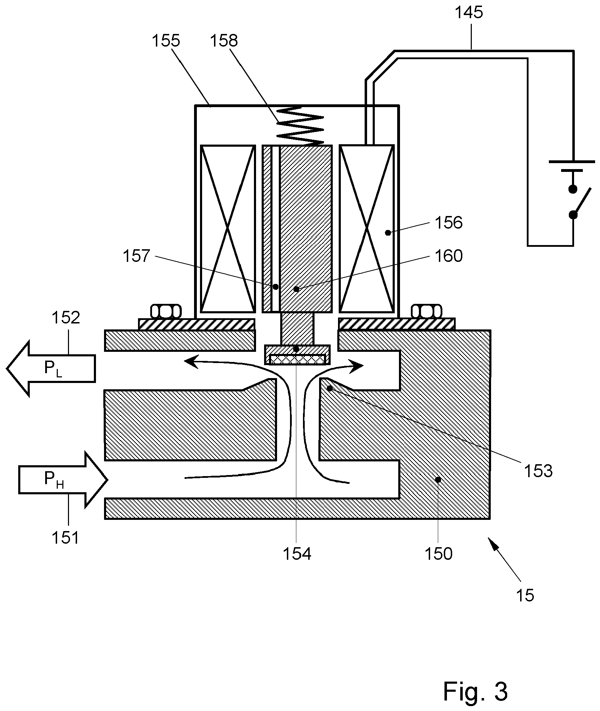

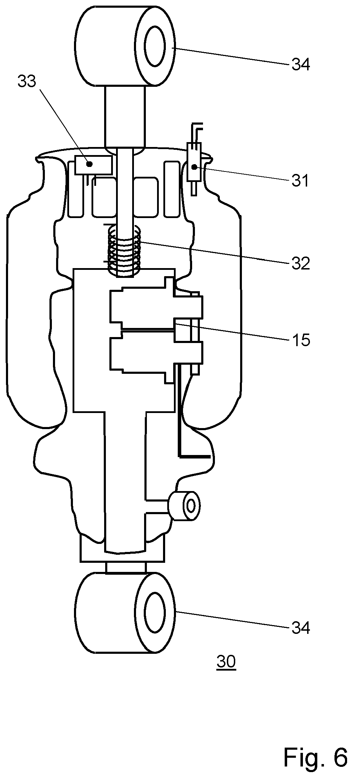

Controller 14 is provided for setting the force setpoint of the valve by powering the actuator based on a reference set value and is communicatively coupled with a vehicle state control system (not shown). The vehicle state control system derives cabin motions from a number of dynamic input variables; such as: vehicle speed; vehicle acceleration; absolute roll; pitch and heave velocities (for skyhook control) of the truck cabin; cabin height and tilt; steering angle and lateral acceleration such as roll, pitch, and heave velocity. Based on a feedforward control strategy alone, a pneumatic pressure can be controlled in the pneumatic spring irrespective of mass flow and temperature. In addition, advantageously, a pressure sensor and height sensor in the pneumatic spring 30 (see Figure 6) may provide set values via a feedback control. Upstream valve 15 has a valve outlet 152 formed by the spring terminal 13. A second downstream valve 16 has an inlet 161 coupled to the spring terminal 13 and an outlet 162 coupled to the vent 25 via a vent terminal 12. Valves 15 and 16 are of a force settable type for defining a settable pressure difference between the inlet and outlet terminals of the valves respectively and are in more detail illustrated in Figure 3.

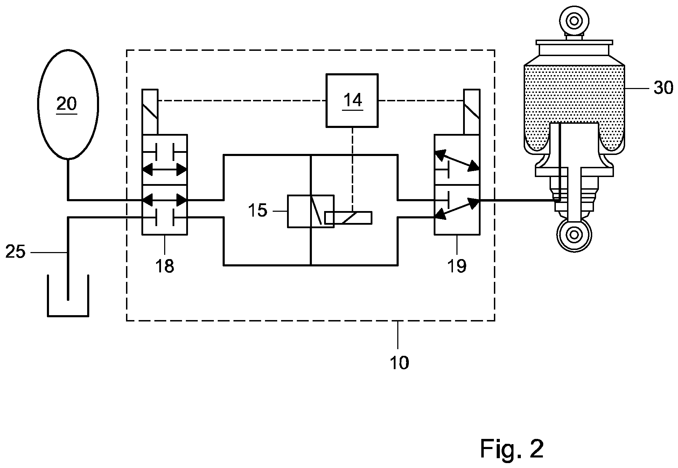

Figure 2 shows another arrangement wherein a combination of a force settable valve 15 is shown with two fast switching valves 18 and 19 working together in synchronicity to define a unidirectional flow path through the valve 15 selectively acting as upstream valve between the pressure supply 20 and spring 30 or as downstream valve between vent 25 and spring 30. In the pressurizing condition of spring 30; fast switch 18 couples pressure supply 20 and decouples vent 25; conversely, in the depressurizing condition of spring 30, fast switch 18 decouples pressure supply and couples vent. Simultaneously, fast switch 19 blocks return flow path and allows passage of gas flow forced through force settable valve 15; conversely, when depressurizing; fast switch 19 provides a return flow path to flow through force settable valve to provide a unidirectional flow through force settable valve 15. Other combinations of a force settable valve 15 and a fast switching valve arrangement likewise fall under the inventive concept.

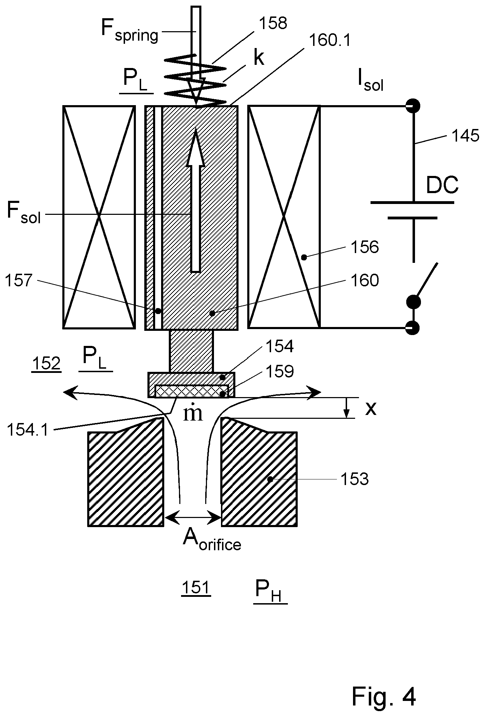

Figure 3 shows a force settable valve 15 in more detail. Specifically, the valve 15 has a valve outlet 152, and a valve inlet 151. The valve is unidirectional and has a high pressure inlet and a lower pressure outlet - defining an unidirectional flow from the inlet 151 to the outlet 152. A valve seat 153 separates the valve inlet 151 and the valve outlet 152. Inlet 151, outlet 152 and valve seat 153 may be provided in a valve housing 150. A valve member 154 is enclosed in the outlet by in a casing 155 that houses an electric actuator 156. The casing communicatively connects to valve outlet 152 so that valve member is enclosed in the valve outlet 152 and thereby subject to the pressure of the valve outlet. The valve member 154 is pressed in normally closed condition against the valve seat 153 by a spring 158 via piston 160 for example, a coil spring. The valve member 154 is coupled to a piston 160 that may be provided with a bore 157 for damping function. Electric actuator 156 is mechanically coupled to the valve member 154 via piston 160, the actuator 156 having a continuously variable force setpoint. By powering the actuator 156; specifically; by current control 145 a preset pressure difference between the inlet 151 and outlet terminal 152 is automatically adjusted by a pneumatic pressure control servo mechanism which will be explained in more detail in the upcoming section on the discussion of Figure 4 irrespective of mass flow and temperature. The geometry of this valve is unidirectional having a high pressure in the valve inlet 151 and a lower pressure in the valve outlet 152.

Figure 4 shows the working principle of the valve 15 in more detail; wherein the valve seat 153 defines a pressure area equal to the seat orifice A. It is noted that in an inverted geometry of the actuator, the valve member may be actuated via orifice A and may thereby have a reduced effective area on the valve member 154 subject to the pressure difference between in and outlet pressure. A typical orifice can be 6 mm wide in diameter or larger to have sufficient fast gas flow with pressure values of 5 -10 bar and switching times with typical time constants of 0.5 -1.5 seconds to provide force variations of 3000 - 6000 N. The electromagnetic force provided for a set current $I_{sol}$ (current control 145)via a solenoid 156 with a force ranging in predetermined force range of approximately 10% (dependent on the design of the proportional valve and desired accuracy of proportional pneumatic pressure control) from an average set force irrespective of the valve member position.

High pressure $P_H$ from inlet 151 is balanced by low pressure $P_L$ from outlet 152 resulting in a net pressure of $P_H$ minus $P_L$ exerted on valve member via an effective valve member surface with area $A_{orifice}$. A force difference between a relatively weak spring (with sufficient pretension force) and a controlled counter force of the solenoid balances the pressure difference on this effective valve member surface area. Hereby a flow throughput is established which is effective by a valve member gap distance x. Since the solenoid controls this counterforce to be constant, the throughput is made effective irrespective of gas flow and temperature, and the pressure in outlet 152 (coupled to pneumatic spring) is held constant relative to the inlet 151 (coupled to pressure supply), so that an automatic pneumatic pressure control servo mechanism is established wherein the valve member is held floating due to the pressure difference and the controlled counterforce. When throughput fluctuations arise due to thermal effects or dynamic impact, the floating pressure member automatically adjusts under influence of the preset force thus establishing a pressure control servo mechanism. Controller 14 can thus provide a force setpoint directly related to a pressure control in the pneumatic spring irrespective of temperature and gas flow.

The equations of valve valve member motion are as follows:

$$\mathrm{F}_{\mathrm{spring}} - \mathrm{F}_{sol}(I, x) = m_{sol}\ddot{x} + c\dot{x} + kx + (p_H - p_L) \cdot A_{orifice}$$
$$p_H - p_L = f(\dot{m}, x)$$
$$\Downarrow \text{steady state}$$
$$(p_H - p_L)_{ss} = \frac{\mathrm{F}_{\mathrm{spring}} - F_{sol}(I, x)}{A_{orifice}}$$

Here, $F_{spring}$ is a pretension force, strong enough to close the valve (leakage free) irrespective of the actuator pressure, exerted by spring 158 and $F_{sol}$ is the counter force provided by solenoid system 156; k is a spring constant of spring 158 and c is a damping factor. A typical pretension force may be about 40-100 N, typically 60 N Valve member 154 and/or valve seat 153 preferably comprises an elastomeric sealant 159 to completely seal the orifice in normally closed condition, contrary to sliding valve types as for instance disclosed in DE102009012581. By the sealant 159, in normally closed condition, the valve will completely seal the gas in the pneumatic spring, which will reduce power use. The seal is sufficiently rigid to prevent ridging, and substantially maintain its geometry in use.

High inlet pressure $P_H$ is communicated on the valve member surface 154.1 via effective valve orifice $A_{orifice}$ in opening direction. Low outlet pressure $p_L$ is counteracting the valve member in closing direction on effective surface 160.1 axially opposite first valve member surface 154.1. In use, an inlet pressure is exerted on an effective area of the valve member 154 via the valve seat 153 orifice, the valve member 154 being enclosed in the valve outlet by casing 155 so that an outlet pressure $P_L$ counteracts on the valve member 154; the valve member 154 being subject to force generated by a pressure difference between inlet 151 and outlet 152. The pressure servo mechanism gives rise to the fact that the pressure difference between inlet and out outlet is automatically adjusted in relation (or proportion) to the spring closing force $F_{spring}$ minus the actuated solenoid force $F_{sol}$ (see steady state equation). The larger the orifice area $A_{orifice}$, the more sensitive the control of pressure servo mechanism will react to changes in actuation force $F_{sol}$ and disturbances in mass flow and temperature.

A typical force diagram of solenoid system 156 is shown in Figure 5 of a solenoid valve system as for example can be found in US4954799 and that can be obtained from a commercially obtainable hydraulic proportional pressure relief valve. Typically, a standard solenoid of a direct current proportional solenoid can be designed so that the solenoid force - stroke curve is as horizontal and linear as possible around a working stroke Sa. The pressure is thereby controlled electrically, wherein the solenoid electric control signal is supplied by appropriate control electronics operating the solenoid 156 (control currents $I_1$, $I_2$). Figure 5 shows good constant force behaviour of the solenoid irrespective of the valve member position. The solenoid force is characterized by a constant force behaviour of the solenoid irrespective of the valve member position. While practical values may vary, preferably, the electric actuation is provided by a solenoid with a force ranging in predetermined force range of approximately 10% from an average set force irrespective of the valve member position defined by system properties specifically, having a spring constant that is preferably very low. A typical value may be less than about 3 N/mm and values 10 N/mm. Remarkably, with practical pressures of 5-15 bar, while the spring pretension force (depending of the orifice area $A_{orifice}$ may be typically quite strong (typically 50-100 N), the spring constant is preferably very low for efficient control dynamics. In addition, or alternatively, control circuitry may be arranged to vary the control power dependent on the valve position; to supply a substantially constant force irrespective of the opening distance by an electric actuator with a settable electromagnetic force for each valve member position.

Figure 6 shows another embodiment according to the invention wherein the valve is integrated in the pneumatic spring 30. A pressure sensor 31 measures the gas spring pressure bellows for feedback to controller 14 (see fig 14). In addition, a spring deflection sensor 32 provides a deflection distance that varies dependent on the pressure state in the bellows and counter forces acting on the spring couplers 34 coupled to a vehicle chassis and a cabin respectively. The gap height is indicative of the spring extension between couplers 34. Further control for active suspension can be gained from an optional vertical acting acceleration sensor 33 which may improve the quality of the overall vehicle control system and/or state estimation of occurring cabin motions (note that for skyhook control the absolute cabin heave velocity is required, which is not directly measurable by simple straight forward sensors). The integrated valve device 15 may be of a form disclosed in Figure 1 - Figure 4 and obviates separate mounting of valves which simplifies mounting and wiring the pressure lines and control lines; saves weight and costs and improves robustness. The spring unit may advantageously be combined a central hydraulic damper (not drawn in Figure 6 for reasons of transparency). Moreover the proportional pressure control valves can be either mounted internally (according to the Figure) or externally when the packaging requires this. A separate valve block can be spared in this manner.

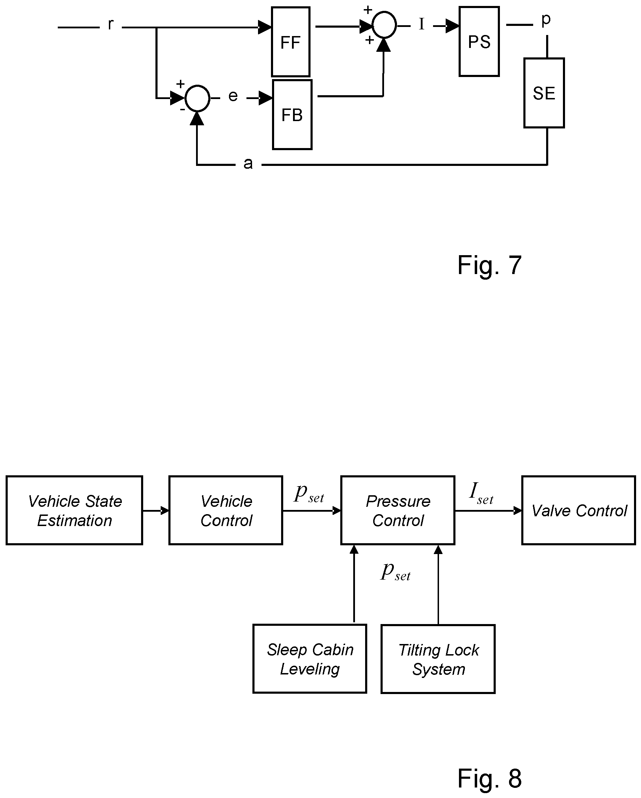

Figure 7 and Figure 8 finally illustrate an error control loop that combines pressure feedback and feed forward control. The following variables are used:

- r ; reference pressure signal
- e ; error signal
- I ; current signal
- p ; pressure in pneumatic system
- a ; measured pressure in system
- FB ; Weak feedback controller
- FF ; Feedforward based on PI-characteristic
- PS ; Pneumatic system (valve and air-spring & other hardware)
- SE ; Pressure sensor

The better the accuracy of the valve integrated pressure servo mechanism the more on feedforward according to measured pressure - current (P-I) characteristcs can be relied by designing the required computer control system. Additional feedback from the spring pressure sensor may be provided for setting the pressure which optimizes the dynamic behaviour of the spring 30. Feedback from the spring deflection may be provided to further optimize the behaviour of the pneumatic spring, typically, to provide passive spring behaviour with a fixed constant gas amount minimizing the power use of the spring system.

Figure 8 shows a relation between a vehicle state estimation and the valve control; via a vehicle state control system that may provide a feed forward characteristic with a force set value to pressure controller. The vehicle state estimator is formed from a number of dynamic input variables; such as: vehicle speed; vehicle acceleration; absolute roll; pitch and heave velocities (for skyhook control) of the truck cabin; cabin height and tilt; steering angle and lateral acceleration.

In an embodiment; the pressure controller selectively powers the actuator dependent on a measured height different from a set height for passive pneumatic spring action; wherein the selective powering is dependent on a predetermined set height larger than 5% of the measured height to reduce energy consumption (during highway operation for instance). Alternatively or additionally, the pressure controller selectively powers the actuator so as to have a set height that levels the driver's compartment for example, during parking. A level cabin provides more comfort, specifically for sleeping to the driver when parked on uneven surface. The vehicle state estimator may provide selectively powering of the actuator dependent on a vehicle state safety condition.

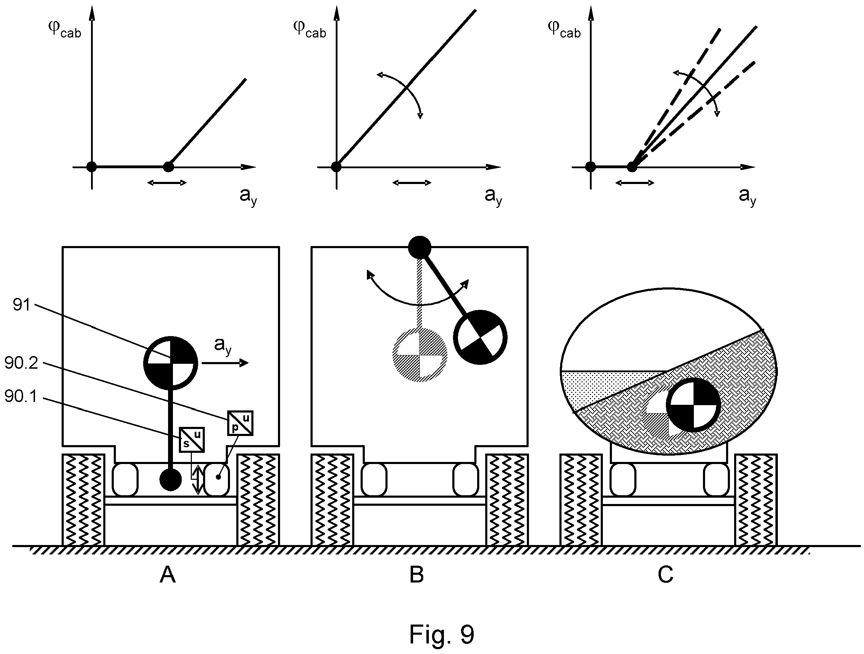

Figure 9 shows typical load conditions that can be derived by a vehicle state controller coupled to pressure sensors 90.2 and deflection sensors 90.1 in the vehicle suspension; and lateral accelerometers (not depicted) to determine a dynamic centre of gravity 91. In this way, vehicle state safety condition is provided by a vehicle state controller arranged to derive a vehicle load condition provided with a roll-over warning control system. Dependent on load condition, for example, if it is determined, from the deflection, pressure and accelerometers that the load is stably mounted on the floor and has a stable, relatively low center of gravity (as shown in Figure 9A) an anti-roll control strategy can be adopted that controls the cabin suspension in anti-roll mode, typically conditional to lateral accelerations be kept below about 2-3.5 m/s2 to have a level "skyhook" cabin suspension. Above these acceleration values, gradedly, roll behaviour may be provided. Such anti-roll strategy will substantially enhance the steering behaviour of the vehicle resulting in a "where you steer is where you go!" steering precision sensation for the driver, which strongly improves the ease of steering operation while overtaking and/or driving in roundabouts. On the other hand when the vehicle state engine determines, by accelerometers, pressure and deflection sensors, a load condition similar to Figure 9B or 9C (high mounted dynamic center of gravity or moving fluid), corresponding to a risky vehicle state safety condition, the controller may selectively power the actuator so as to have a set height that unlevels the driver's compartment to provide a haptonomic feedback of the safety condition. Cabin roll motion is in important indicator for humans to judge the cornering safety margin of the vehicle combination. A large roll angle gives a feeling of discomfort and growing instability sensation. A trailer loading condition can be sensed by relating the actual measured acceleration to air bellows pressure and/or suspension deflection. In this way the so-called load transfer force generation mechanism from inner to outer wheels can be monitored, and different roll strategy scenario's according to the upper graphs of Figure 9 can be simulated. Once experienced a stable and comfortable high steering precision scenario, corresponding to a stable trailer loading condition, the driver will be greatly discouraged to take bends too fast when he is submitted to a cabin roll control setting which allows for enlarged cabin roll motions. Summarizing above one can conclude that the typical shaping characteristics of the upper diagrams of Figure 9, like the level of lateral acceleration where the cabin starts to roll and the slope (or gradient) roll angle as function of increasing acceleration are import parameters to tune the effectiveness of the typical haptonomic roll-over warning system. Alternatively, when an unsafe condition is detected; for example a speed that is too high or the steering is too abrupt; the normal pressure control may be switched of or even slightly reversed to provide increased roll angles to thereby warn a driver of the unsafe condition, for example, when approaching a road bend, to provide sufficient roll -reserve for the vehicle movement to prevent roll over. A preset dynamic control strategy may be adopted where a roll angle is actively set dependent on lateral acceleration.

Since the cabin stability is actively provided by the suspension system; conventional stabilizers may be partly omitted or reduced in stiffness; for example, the driver's compartment may be provided with a stabilizer bar collateral with the at least two pneumatic springs, the stabilizer provided with a weakening to improve the ride comfort at undulated roads (excitation of left and right is out of phase). It might be necessary to provide the driver's compartment with a locking structure for locking the pneumatic springs during forward tilting of the cabin (necessary for engine maintenance) when the hydraulic tilting cylinder is located at one side of the vehicle.

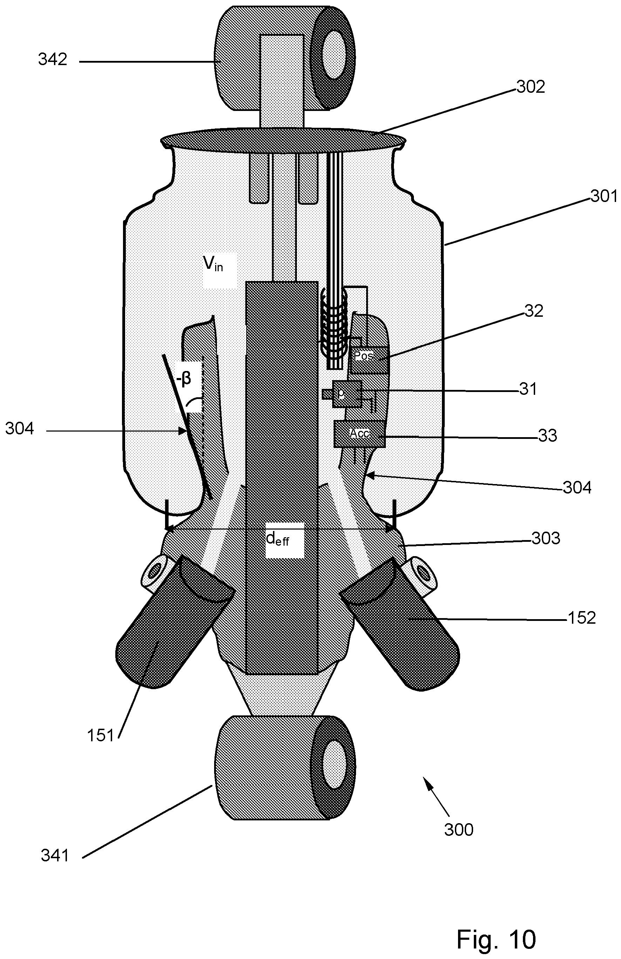

Figure 10 shows yet another embodiment according to the invention wherein the valve is integrated in the pneumatic spring 300. The bellows 301 are attached between a cap element 302 attached to upper spring coupler that may be mounted to the cabin. The bellows are further attached to a housing element 303 that couples to lower spring coupler 341 to be attached to the vehicle chassis. A pressure sensor 31 arranged in the housing 303 measures the gas spring pressure bellows 301 for feedback to vehicle state controller 14. In addition, a spring deflection sensor 32 arranged in housing 303 and cap element 302 respectively provides a deflection distance that varies dependent on the pressure state in the bellows 302 and counter forces acting on the spring couplers 341, 342. The gap height is indicative of the spring extension between couplers 341, 342. Further control for active suspension can be gained from a vertical acting acceleration sensor 33 arranged in the housing which may improve the quality of the overall vehicle control system and/or state estimation of occurring cabin motions. The sensors are preferably formed as a detachable sensor unit integrated in housing 303. Proportional pressure control valves 151, 152, are mounted externally for cooling purposes. The set force that is provided by the pneumatic spring 300, defined by the pressure control of the pressure controller is proportional to the pressure exerted on the effective area with a diameter Deff.

Conveniently, the housing 303 has a contacting wall part 304 for contacting the spring bellows 301 in a working range. The contacting wall part 304 has an effective diameter that decreases when a contact area between the contacting wall part and the spring bellows increases.

The contacting surface for the bellows is preferably formed as conical wall part 304 in a working range with a slope that increases the effective area in the expansion direction of the pneumatic spring 300. In the contraction direction, with increasing contact area between the conical wall part and the spring bellows, the effective diameter decreases with a negative slope - $\beta$ respective to the axial direction in the working range. With a negative slope minus beta, the effective diameter of the housing decreases when the pneumatic spring contracts, and increases when the spring expands. The effective diameter forms and effective area for the spring bellows that generates a spring force F with spring pressure P.

With even further increasing contact area, in contracted position outside a working range, the effective area substantially increases to increase the net counterforce in contracted state of the spring 300.

This latter feature emulates the progressive spring characteristic of a conventional bump stop, advantageously reducing the peak load acting on an eventual rubber bump stop. The conical wall part with a negative slope - $\beta$ has the effect of substantially reducing the amount of gas flow to the spring for generating an increased set force, since both pressure and effective area add to the increased force. A preferred practical range of a slope angle is found to be larger than 20 degrees, or even as large as 30 degrees or more. Furthermore, the passive ride profits from a fairly low effective spring stiffness due to the negative slope so that the active control is preferably only working in cabin movement frequencies below 10 Hz for the sake of minimizing the energy consumption of the active cabin suspension. For providing ride comfort in the high frequency range (typically > 5 - 10 Hz) a fairly soft spring stiffness is applied. This can be achieved by designing a large encapsulated gas volume Vin in the air bellows (the higher the volume, the lower the spring rate). However, a drawback of such a large volume in the new active suspension system application is that fairly large gas flows need to fed to and from the spring element for changing the force set point (e.g. during cornering and/or braking). This is also negative for the optimization of energy consumption.

With the introduction of the conical contour of the housing element 303 the same low spring stiffness for excellent passive ride comfort can be designed in combination with an acceptably compact gas volume Vin within the bellows 301. This functions as follows: in this particular case the effective diameter deff of effective area where the bellows acts on, decreases with increasing contraction of the spring element. Consequently the force acting in the connections 341, 342 to cabin and chassis (which is actually the product of air bellow gas pressure times the effective area) does not rise as dramatically as a spring without the conical feature. This means that the spring stiffness is effectively reduced without enlarging the air volume Vin. Accordingly a design can be achieved with fairly small encapsulated gas volume $V_{in}$ in comparison to conventional air spring without such a conical contour of the housing element 303.

This design is beneficial for optimization overall energy consumption of the 4PP active cabin suspension system.

Of course, this description is deemed to disclose any one of the above embodiments or processes in combination with one or with one or more other embodiments or processes to provide even further improvements in finding and matching users with particular personalities, and providing relevant recommendations. Where the solenoid systems disclosed are of a pulling system that pull the valve member via a piston from the valve seat against spring force; similar configurations are feasible wherein a valve is pushed against the valve seat; or wherein the piston is actuated extending through the valve seat, resulting in a net set force counteracting the pressure difference on the valve member thus establishing a gas flow through a variable gap between the valve member and the valve seat.

Finally, the above-discussion is intended to be merely illustrative of the present system and should not be construed as limiting the appended claims to any particular embodiment or group of embodiments. Thus, while the present system has been described in particular detail with reference to specific exemplary embodiments thereof, it should also be appreciated that numerous modifications and alternative embodiments may be devised by those having ordinary skill in the art without departing from the broader and intended scope of the present system as set forth in the claims that follow. The specification and drawings are accordingly to be regarded in an illustrative manner and are not intended to limit the scope of the appended claims.

In interpreting the appended claims, it should be understood that:

a) the word "comprising" does not exclude the presence of other elements or acts than those listed in a given claim;
b) the word "a" or "an" preceding an element does not exclude the presence of a plurality of such elements;

c) any reference signs in the claims do not limit their scope;

d) several "means" may be represented by the same or different item(s) or hardware or software implemented structure or function;

e) any of the disclosed elements may be comprised of hardware portions (e.g., including discrete and integrated electronic circuitry), software portions (e.g., computer programming), and any combination thereof;

f) hardware portions may be comprised of one or both of analog and digital portions;

g) any of the disclosed devices or portions thereof may be combined together or separated into further portions unless specifically stated otherwise; and

h) no specific sequence of acts or steps is intended to be required unless specifically indicated.

## Claims

1. Suspension system for a driver's compartment on a vehicle chassis, comprising:

   - a mounting arrangement for mounting the driver's compartment on the vehicle chassis including at least two pneumatic springs (30) to be arranged along a lateral side of driver's compartment and coupled between the driver's compartment and the vehicle chassis;
   - a pressure supply (20) and an atmospheric vent (25);
   - for each pneumatic spring (30) respectively, a valve device (10) communicatively coupled to the pressure supply; the vent and a respective pneumatic spring via a respective pressure terminal (11); vent terminal (12) and spring terminal (13);
   - a vehicle state control system (14) that provides a pressure set value in the pneumatic spring (30) ;
   - a pressure controller (145) arranged to the valve device (10) alternatively for pressurizing or depressurizing the pneumatic springs;
   - wherein the valve device (10) comprises at least a first valve (15, 16) having a valve outlet (152) coupled to the spring terminal (13) and a valve inlet (151) communicatively coupled to the pressure terminal (11), and **characterized in that** the first valve comprises

     ◦ a valve seat (153) having an effective orifice ($A_{orifice}$) and separating the valve inlet (151) and the valve outlet (152);
     ◦ a valve member (154) that is pressed in normally closed condition against the valve seat (153) by a spring means (158); so that in use, an inlet pressure is exerted on the valve member (154) via the valve seat orifice (153), the valve member being enclosed (155) in the valve outlet so that an outlet pressure counteracts on the valve member (154); the valve member being subject to force generated by a pressure difference between inlet (151) and outlet (152); and
     ◦ an electric actuator (156, 160) mechanically coupled to the valve member (154) having a continuously variable force set point so as define, by the pressure controller (145), a set force counteracting the pressure difference, to generate a set pressure in the pneumatic spring (30) derived from the vehicle state control system irrespective of gas mass flow and gas temperature.

2. Suspension system according to claim 1, wherein a pressure sensor (31) and a deflection sensor (32) are provided for each pneumatic spring (30), measuring a spring pressure and spring height respectively; the controller is arranged for setting the force setpoint of the valve by powering the actuator based on a reference derived from the pressure sensor and the height sensor.

3. Suspension system according to claim 1, further comprising a second valve (16) having an inlet coupled to the spring terminal (13) and an outlet coupled to the vent (25).

4. Suspension system according to claim 1, wherein the electric actuation is provided by a solenoid (156) with a force ranging in predetermined force range of 10% from an average set force irrespective of the valve member position.

5. Suspension system according to claim 1, wherein the electric actuator (155, 156) is arranged to actuate with a settable electromagnetic force for each valve member position.

6. Suspension system according to claim 1, wherein the valve member (154) and/or the valve seat (153) comprise an elastomeric sealant (159).

7. Suspension system according to claim 1, wherein the valve is integrated in the pneumatic spring (30).

8. Suspension system according to claim 1, wherein the controller (14) selectively powers the actuator dependent on a measured height different from a set height for passive pneumatic spring action; wherein the selective powering is dependent on a predetermined set height larger than 5% of the measured height.

9. Suspension system according to claim 1, wherein the controller (14) selectively powers the actuator so as to have a set height that levels the driver's compartment.

10. Suspension system according to claim 1, wherein the controller (14) selectively powers the actuator dependent on a vehicle state safety condition.

11. Suspension system according to claim 10, wherein the vehicle state safety condition is provided by a vehicle state controller (14) arranged to derive a vehicle load condition.

12. Suspension system according to claim 11, wherein the vehicle state controller (14) uses sensor information from a lateral accelerometer, truck rear wheel suspension stroke and/or air bellows pressure to monitor the load transfer from inner to outer wheels and consequently deriving a safety state condition

13. Suspension system according to claim 10-12, wherein, dependent on a vehicle state safety condition the controller (14) selectively powers the actuator so as to have a set height that unlevels the driver's compartment to provide a haptonomic feedback of the safety condition.

14. Suspension system according to claim 13, wherin the haptonomic feedback of the safety condition is provided on the basis of the level of lateral acceleration where the cabin starts to roll and the slope (or gradient) roll angle as function of increasing acceleration

15. Suspension system according to claim 1, including four pneumatic springs (30) arranged on the corners of the driver's compartment.

16. Suspension system according to claim 1, wherein the driver's compartment is provided with a stabilizer bar collateral with the at least two pneumatic springs, the stabilizer provided with a weakening.

17. Suspension system according to claim 1, wherein the driver's compartment is provided with a locking structure for locking at least one pneumatic pneumatic spring during cabin tilting.

18. Suspension system according to claim 1, wherein the pneumatic spring (30) comprises a cap (302) and a housing (303), the cap and housing having spring bellows (301) arranged therebetween and each comprising a spring coupler (341, 342), wherein the housing (303) has a contacting wall part (304) for contacting the spring bellows (301) in a working range, the contacting wall part (304) having an effective diameter that decreases when a contact between the contacting wall part and the spring bellows (301) increases.

**Patentansprüche**

1. Aufhängungssystem für eine Fahrerkabine auf einem Fahrzeugfahrgestell, umfassend:

   - eine Montageanordnung zum Montieren der Fahrerkabine auf dem Fahrzeugfahrgestell, umfassend mindestens zwei Pneumatikfedern (30), anzuordnen entlang einer lateralen Seite der Fahrerkabine und gekoppelt zwischen der Fahrerkabine und dem Fahrzeugfahrgestell;
   - eine Druckversorgung (20) und eine atmosphärische Entlüftung (25);
   - für jeweils jede pneumatische Feder (30) eine Ventilvorrichtung (10), kommunikativ gekoppelt an die Druckversorgung; die Entlüftung und eine entsprechende Pneumatikfeder über eine entsprechende Druckklemme (11); Entlüftungsklemme (12) und Federklemme (13);
   - ein Fahrzeugstatus-Steuersystem (14), das einen Drucksollwert in der Pneumatikfeder (30) bereitstellt;
   - einen Druckregler (145), angeordnet an der Ventilvorrichtung (10), um abwechselnd die Pneumatikfedern mit Druck zu beaufschlagen oder drucklos zu machen;
   - wobei die Ventilvorrichtung (10) mindestens ein erstes Ventil (15, 16) mit einem Ventilauslass (152), gekoppelt an die Federklemme (13), und einem Ventileinlass (151), kommunikativ gekoppelt an die Druckklemme (11), umfasst, und **dadurch gekennzeichnet, dass** das erste Ventil Folgendes umfasst:

- einen Ventilsitz (153) mit einer effektiven Öffnung ($A_{orifice}$), der den Ventileinlass (151) und den Ventilauslass (152) trennt;
- ein Ventilelement (154), das in normalerweise geschlossenem Zustand durch ein Federmittel (158) gegen den Ventilsitz (153) drückt; sodass, bei Verwendung, über die Ventilsitzöffnung (153) ein Einlassdruck auf das Ventilelement (154) ausgeübt wird, welches Ventilelement in den Ventilauslass eingeschlossen ist (155), sodass ein Auslassdruck auf das Ventilelement (154) entgegenwirkt; das Ventilelement einer Kraft ausgesetzt wird, die von einem Druckunterschied zwischen Einlass (151) und Auslass (152) erzeugt wird; und
- einen elektrischen Betätiger (156, 160), der mechanisch an das Ventilelement (154) gekoppelt ist, mit einem stufenlos variablen Kraftsollpunkt, um durch den Druckregler (145) eine Sollkraft zu definieren, die dem Druckunterschied entgegenwirkt, um einen Solldruck in der Pneumatikfeder (30) zu erzeugen, abgeleitet von dem Fahrzeugstatus-Steuersystem, unabhängig von Gasmassefluss und Gastemperatur.

2. Aufhängungssystem nach Anspruch 1, wobei ein Drucksensor (31) und ein Ablenkungssensor (32) für jede Pneumatikfeder (30) bereitgestellt sind, die einen Federdruck bzw. eine Federhöhe messen; der Regler angeordnet ist, um den Kraftsollpunkt des Ventils durch Versorgung des Betätigers basierend auf einer Referenz, abgeleitet von dem Drucksensor und dem Höhensensor, einzustellen.

3. Aufhängungssystem nach Anspruch 1, ferner umfassend ein zweites Ventil (16) mit einem Einlass, gekoppelt an die Federklemme (13), und einem Auslass, gekoppelt an die Entlüftung (25).

4. Aufhängungssystem nach Anspruch 1, wobei die elektrische Betätigung durch ein Solenoid (156) bereitgestellt wird, mit einer Kraft in einem vorbestimmten Kraftbereich von 10 % einer durchschnittlichen Sollkraft, unabhängig von der Ventilelementposition.

5. Aufhängungssystem nach Anspruch 1, wobei der elektrische Betätiger (155, 156) angeordnet ist zur Betätigung mit einer einstellbaren elektromagnetischen Kraft für jede Ventilelementposition.

6. Aufhängungssystem nach Anspruch 1, wobei das Ventilelement (154) und/oder der Ventilsitz (153) ein elastomeres Dichtungsmittel (159) umfassen.

7. Aufhängungssystem nach Anspruch 1, wobei das Ventil in die Pneumatikfeder (30) integriert ist.

8. Aufhängungssystem nach Anspruch 1, wobei der Regler (14) den Betätiger abhängig von einer gemessenen Höhe, die sich von einer Sollhöhe für passive Pneumatikfederaktion unterscheidet, selektiv versorgt; wobei die selektive Versorgung von einer vorbestimmten Sollhöhe abhängt, die größer als 5 % der gemessenen Höhe ist.

9. Aufhängungssystem nach Anspruch 1, wobei der Regler (14) den Betätiger selektiv versorgt, um eine Sollhöhe zu haben, die die Fahrerkabine nivelliert.

10. Aufhängungssystem nach Anspruch 1, wobei der Regler (14) den Betätiger abhängig von einem Fahrzeugstatus-Sicherheitszustand selektiv versorgt.

11. Aufhängungssystem nach Anspruch 10, wobei der Fahrzeugstatus-Sicherheitszustand von einem Fahrzeugstatusregler (14) bereitgestellt wird, der angeordnet ist, einen Fahrzeugladezustand abzuleiten.

12. Aufhängungssystem nach Anspruch 11, wobei der Fahrzeugstatusregler (14) Sensorinformation von einem lateralen Beschleunigungsmesser, einem Lkw-Hinterrad-Aufhängungshub und/oder Luftbalgdruck verwendet, um die Lastübertragung von Innen- zu Außenrädern zu überwachen und folglich einen Sicherheitsstatuszustand abzuleiten.

13. Aufhängungssystem nach Anspruch 10-12, wobei, abhängig von einem Fahrzeugstatus-Sicherheitszustand, der Regler (14) den Betätiger selektiv versorgt, um eine Sollhöhe zu haben, welche die Fahrerkabine entnivelliert, um ein haptonomes Feedback des Sicherheitszustands bereitzustellen.

**14.** Aufhängungssystem nach Anspruch 13, wobei das haptonome Feedback des Sicherheitszustands auf der Basis des Niveaus lateraler Beschleunigung bereitgestellt wird, wo die Kabine abhängig von zunehmender Beschleunigung zu rollen beginnt und der Steilheits- (oder Neigungs)-Rollwinkel.

**15.** Aufhängungssystem nach Anspruch 1, umfassend vier Pneumatikfedern (30), angeordnet an den Ecken der Fahrerkabine.

**16.** Aufhängungssystem nach Anspruch 1, wobei die Fahrerkabine mit einer Stabilisatorstange versehen ist, die kollateral mit den mindestens zwei Pneumatikfedern ist, welcher Stabilisator mit einer Schwächung versehen ist.

**17.** Aufhängungssystem nach Anspruch 1, wobei die Fahrerkabine mit einer Verriegelungsstruktur versehen ist, um mindestens eine Pneumatikfeder während des Kippens der Kabine zu verriegeln.

**18.** Aufhängungssystem nach Anspruch 1, wobei die Pneumatikfeder (30) eine Kappe (302) und eine Gehäuse (303) umfasst, welche Kappe und welches Gehäuse dazwischen angeordnete Federbalge (301) haben und jeweils eine Federkopplung (341, 342) umfassen, wobei das Gehäuse (303) ein berührendes Wandteil (304) hat, um den Federbalg (301) in einem Arbeitsbereich zu berühren, welches berührende Wandteil (304) einen effektiven Durchmesser hat, der abnimmt, wenn eine Berührung zwischen dem berührenden Wandteil und dem Federbalg (301) zunimmt.

## Revendications

**1.** Système de suspension pour un poste de conduite sur un châssis de véhicule, comprenant :

un agencement de montage pour monter le poste de conduite sur le châssis de véhicule comprenant au moins deux ressorts pneumatiques (30) destinés à être agencés le long d'un côté latéral du poste de conduite et couplés entre le poste de conduite et le châssis de véhicule ;
une alimentation de pression (20) et un évent atmosphérique (25) ;
pour chaque ressort pneumatique (30) respectivement, un dispositif de soupape (10) couplé en communication à l'alimentation de pression ; l'évent et un ressort pneumatique respectif via une borne à pression (11) ; une borne à évent (12) et une borne à ressort (13) ;
un système de commande d'état de véhicule (14) qui fournit une valeur de consigne de pression dans le ressort pneumatique (30) ;
un organe de commande de pression (145) agencé sur le dispositif de soupape (10) de manière alternée pour mettre sous pression et dépressuriser les ressorts pneumatiques ;
dans lequel le dispositif de soupape (10) comprend au moins une première soupape (15, 16) ayant une sortie de soupape (152) couplée à la borne à ressort (13) et une entrée de soupape (151) couplée en communication à la borne à pression (11), et **caractérisé en ce que** la première soupape comprend :

un siège de soupape (153) ayant un orifice effectif ($A_{orifice}$) et séparant l'entrée de soupape (151) et la sortie de soupape (152) ;
un élément de soupape (154) qui est comprimé dans une condition normalement fermée contre le siège de soupape (153) par un moyen de ressort (158) ; de sorte qu'à l'usage, une pression d'entrée est exercée sur l'élément de soupape (154) via l'orifice de siège de soupape (153), l'élément de soupape étant enfermé (155) dans la sortie de soupape de sorte qu'une pression de sortie s'oppose à l'élément de soupape (154) ; l'élément de soupape étant soumis à la force générée par une différence de pression entre l'entrée (151) et la sortie (152) ; et
un actionneur électrique (156, 160) mécaniquement couplé à l'élément de soupape (154) ayant un point de consigne de force à variation continue afin de définir, par l'organe de commande de pression (145), une force de consigne s'opposant à la différence de pression, pour générer une pression de consigne dans le ressort pneumatique (30) dérivée du système de commande d'état de véhicule indépendamment de l'écoulement massique de gaz et de la température de gaz.

**2.** Système de suspension selon la revendication 1, dans lequel un capteur de pression (31) et un capteur de déviation (32) sont prévus pour chaque ressort pneumatique (30), mesurant une pression de ressort et une hauteur de ressort respectivement ; l'organe de commande est agencé pour déterminer le point de consigne de force de la soupape en actionnant l'actionneur en fonction d'une référence dérivée du capteur de pression et du capteur de hauteur.

3. Système de suspension selon la revendication 1, comprenant en outre une seconde soupape (16) ayant une entrée couplée à la borne à ressort (13) et une sortie couplée à l'évent (25).

4. Système de suspension selon la revendication 1, dans lequel l'actionnement électrique est fourni par un solénoïde (156) avec une force dans une plage de force prédéterminée de 10% à partir d'une force de consigne moyenne indépendamment de la position de l'élément de soupape.

5. Système de suspension selon la revendication 1, dans lequel l'actionneur électrique (155, 156) est agencé pour fonctionner avec une force électromagnétique pouvant être déterminée pour chaque position d'élément de soupape.

6. Système de suspension selon la revendication 1, dans lequel l'élément de soupape (154) et/ou le siège de soupape (153) comprennent un agent de scellement élastomère (159).

7. Système de suspension selon la revendication 1, dans lequel la soupape est intégrée dans le ressort pneumatique (30).

8. Système de suspension selon la revendication 1, dans lequel l'organe de commande (14) alimente sélectivement l'actionneur en fonction d'une hauteur mesurée différente d'une hauteur de consigne pour l'action de rappel pneumatique passive ;
dans lequel l'alimentation sélective dépend d'une hauteur de consigne prédéterminée supérieure à 5% de la hauteur mesurée.

9. Système de suspension selon la revendication 1, dans lequel l'organe de commande (14) alimente sélectivement l'actionneur pour avoir une hauteur de consigne qui met le poste de conduite de niveau.

10. Système de suspension selon la revendication 1, dans lequel l'organe de commande (14) alimente sélectivement l'actionneur en fonction de la condition de sécurité d'état de véhicule.

11. Système de suspension selon la revendication 10, dans lequel la condition de sécurité d'état de véhicule est fournie par un organe de commande d'état de véhicule (14) agencé pour dériver une condition de charge de véhicule.

12. Système de suspension selon la revendication 11, dans lequel l'organe de commande d'état de véhicule (14) utilise une information de capteur provenant d'un accéléromètre latéral, une course de suspension de roue arrière de camion et/ou la pression de soufflet d'air pour surveiller le transfert de charge des roues internes aux roues externes et dérivant par conséquent une condition d'état de sécurité.

13. Système de suspension selon les revendications 10 à 12, dans lequel, en fonction d'une condition de sécurité d'état de véhicule, l'organe de commande (14) alimente sélectivement l'actionneur afin d'avoir une hauteur de consigne qui supprime la mise à niveau du poste de conduite afin de fournir une rétroaction d'haptonomie de la condition de sécurité.

14. Système de suspension selon la revendication 13, dans lequel la rétroaction d'haptonomie de la condition de sécurité est fournie sur la base du niveau de l'accélération latérale où la cabine commence à présenter un mouvement de roulis et de l'angle de roulis d'inclinaison (ou gradient) en fonction de l'accélération croissante.

15. Système de suspension selon la revendication 1, comprenant quatre ressorts pneumatiques (30) agencés sur les coins du poste de conduite.

16. Système de suspension selon la revendication 1, dans lequel le poste de conduite est prévu avec une barre stabilisatrice collatérale avec les au moins deux ressorts pneumatiques, le stabilisateur étant prévu avec un affaiblissement.

17. Système de suspension selon la revendication 1, dans lequel le poste de conduite est prévu avec une structure de blocage pour bloquer au moins un ressort pneumatique pendant l'inclinaison de la cabine.

18. Système de suspension selon la revendication 1, dans lequel le ressort pneumatique (30) comprend un capuchon (302) et un boîtier (303), le capuchon et le boîtier ayant des soufflets de ressort (301) agencés entre eux et chacun comprenant un dispositif de couplage de ressort (341, 342), dans lequel le boîtier (303) a une partie de paroi de contact (304) pour être en contact avec les soufflets de ressort (301) dans une plage de travail, la partie de paroi de contact (304) ayant un diamètre effectif qui diminue lorsqu'un contact entre la partie de paroi de contact et le soufflet de ressort (301) augmente.

Fig. 1

Fig. 2

Fig. 3

Fig. 4

Fig. 5

Fig. 6

Fig. 7

Fig. 8

Fig. 9

Fig. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102009012581
- WO 2010019038 A
- US 4954799 A

**Non-patent literature cited in the description**

- **A. WIESMEIER ; F. UFFELMANN.** Vibration Isolated Cabin by Active Suspension - Requirements, Concept and First Results. *SAE technical paper seriesl,pap. 910023,* 1991